# EUROPÄISCHE PATENTSCHRIFT

(11) **EP 0 475 070 B1**
(45) Veröffentlichungstag und Bekanntmachung des Hinweises auf die Patenterteilung: **23.11.1994**
(21) Anmeldenummer: 91113126.6
(22) Anmeldetag: 05.08.1991
(51) Int. Cl.: F16K 11/07, F16J 15/32

(54) **Mehrwegeventil**
Multiple way valve
Vanne à voies multiples

(30) Priorität: 31.08.1990 DE 4027520; 25.07.1991 EP 91112475
(43) Veröffentlichungstag der Anmeldung: 18.03.1992
(73) Patentinhaber: Festo KG, D-73734 Esslingen (DE)
(72) Erfinder: Stoll, Kurt, Dipl.-Ing., W-7300 Esslingen (DE); Rüdle, Manfred, Dipl.-Ing., W-7300 Esslingen (DE)
(74) Vertreter: Abel, Martin, Dipl.-Ing.

(56) Entgegenhaltungen:
- US-A- 3 565 115
- US-A- 3 951 381

## Beschreibung

Die Erfindung betrifft ein Mehrwegeventil mit einer Dichtungsanordnung zur Abdichtung des axial bewegbaren Ventilkolbens gegenüber dem Ventilgehäuse, die in einer Ventilgehäuse-Ausnehmung oder auf dem Ventilkolben axial unbewegbar gehäuse- bzw. kolbenfest festgelegt ist und mindestens eine ringförmige Dichtungseinheit aufweist, die ein zwischen zwei axial beabstandeten ringförmigen Wänden gehaltenes ringförmiges Dichtelement aufweist, wobei die beiden Wände Bestandteil eines mehrteiligen Gehäuseringes sind, der eine radial nach innen bzw. nach außen gerichtete umlaufende Gehäuseöffnung aufweist, wobei in dem Ringraum zwischen den beiden axialen Wänden des Gehäuseringes ein einstückiges Dichtelement radial nachgiebig festgelegt ist, wobei das Dichtelement eine im Querschnitt gesehen sich radial erstreckende ringförmige Dichtlippe besitzt, die mit einer Dichtpartie durch die Gehäuseöffnung aus dem Ringraum herausragt, radial über den Gehäusering vorsteht und ringsum dichtend am Ventilkolben bzw. an der Ventilgehäuse-Ausnehmung anliegt, wobei der innerhalb des Ringraumes befindliche Abschnitt der Dichtlippe von als Stützpartien wirkenden Abschnitten der beiden Wände axial flankiert ist, und wobei das Dichtelement mindestens einen axial vorspringenden umlaufenden Haltevorsprung aufweist, der zur unverlierbaren Halterung des Dichtelementes eine vom Gehäusering innerhalb des Ringraumes gebildete Gehäusestufe hintergreift.

Ein Mehrwegeventil dieser Art geht aus der französischen Patentschrift FR-A-2 314 411 hervor. Seine Dichtungsanordnung umfaßt mehrere identische Dichtungseinheiten, die jeweils aus zwei separaten Ringscheiben bestehen, zwischen denen radial aufeinanderfolgend mehrere Dichtelemente gehalten sind. Da somit jede Dichtungseinheit aus einer Mehrzahl von losen Teilen besteht, die erst nach erfolgter Montage im Ventilgehäuse relativ zueinander festgelegt sind, ist die Handhabung und Montage relativ kompliziert. Da sich die Ringscheiben im montierten Zustand nur mit einem schmalen Rand am Ventilgehäuse abstützen können, ist die Halterung überdies nicht sehr stabil. Ferner können die beiden Ringscheiben einer jeweiligen Dichtungseinheit bei der Montage versehentlich zu stark zusammengedrückt werden, wodurch die Funktion der zwischengefügten Dichtelemente beeinträchtigt wird.

Aus der US-A-3 565 115 geht ein Mehrwegeventil hervor, bei dem die Dichtungsanordnungen ebenfalls aus nur lose zusammengesteckten Ringscheiben bestehen. Zur gegenseitigen Lagefixierung erstrecken sich zwischen Ringscheiben benachbarter Dichtungsanordnungen eine käfigartige Struktur bildende axiale Stege. Die Gesamtanordnung ist zwischen zwei Sicherungsringen gehalten.

Es ist daher die Aufgabe der Erfindung, eine Dichtungsanordnung der eingangs genannten Art zu schaffen, die bei kostengünstigem Aufbau und zuverlässiger Dichtwirkung eine problemlose Roboter-Montage ohne Beschädigungsgefahr für Dichtelemente ermöglicht und die Montage in einem Ventil vereinfacht.

Zur Lösung dieser Aufgabe wird vorgeschlagen, daß der Gehäusering einen im wesentlichen U-förmigen Querschnitt aufweist, daß der Gehäusering ausschließlich das einstückige Dichtelement aufnimmt, daß die den Gehäusering bildenden Teile fest zusammengefügt sind, so daß die Dichtungseinheit von einem aus dem Gehäusering und aus dem Dichtelement bestehenden, als einheitliches Bauelement handhabbaren Dichtring gebildet ist, und daß der als einheitliches Bauelement handhabbare Dichtring eine radial nach außen bzw. nach innen weisende umfangsseitige Wand aufweist, die im Preßsitz in der Ventilgehäuse-Ausnehmung bzw. auf dem Ventilkolben festgelegt ist.

Die Dichtungsanordnung des erfindungsgemäßen Mehrwegeventils ermöglicht eine separate Herstellung der Dichtungseinheiten unabhängig von den abzudichtenden Teilen als einheitlich handhabbares Bauelement in Gestalt eines Dichtringes. Der mehrteilige Aufbau ermöglicht ein problemloses Einsetzen des Dichtelementes in den Ringraum des Gehäuseringes vor dem festen Zusammenfügen. Da nur ein einziges Dichtelement vorhanden ist, ist eine zuverlässige Funktionsweise des Dichtringes gewährleistet. Die beidseits der Dichtlippe angeordneten Stützpartien des Gehäuseringes erlauben die Verwendung relativ weicher Dichtmaterialien, da sie die Dichtlippe vor einem seitlichen Umknicken schützen. Das Zusammenwirken eines Haltevorsprunges mit einer Gehäusestufe im Ringraum verhindert ein Herausziehen des Dichtelementes aus dem Gehäusering auch bei starker Belastung. Insgesamt ergibt sich ein robotergerechter Aufbau, was eine automatisierte Montage sowohl der Dichtringe an sich als auch der damit ausgestatteten Ventile begünstigt. Die Dichtringe sind universell einsetzbar, wobei sich entsprechend der gewählten radialen Orientierung der Gehäuseöffnung ein innendichtender oder außendichtender Dichtring ergibt. Als Material für das einstückige Dichtelement kommt vorzugsweise ein elastisches Kunststoffmaterial wie Perbunan oder Polyurethan zum Einsatz. Der Gehäusering besteht vorzugsweise aus Metall, kann aber auch ganz oder teilweise aus Kunststoffmaterial bestehen, wobei vorzugsweise ein hochfestes Polymer verwendet wird.

Aus der US-PS 3 275 334 ist bereits eine patronenartige ringförmige Dichtungsanordnung bekannt. Sie besteht allerdings aus mehreren Dichtelementen, die mittels einer Spiralfeder gegen die abzudichtende Fläche angedrückt werden. Außerdem handelt es sich hierbei um die Abdichtung rotierender Bauteile, wobei das Gehäuse der Dichtungsanordnung feststeht und die Dichtelemente relativ hierzu eine Rotationsbewegung ausüben, im Rahmen derer sie am Dichtungsgehäuse entlanggleiten.

Aus der CH-PS 600 202 geht eine Dichtungsanordnung hervor, die ebenfalls mehrere Dichtelemente besitzt. Diese sind überdies in einer radialen Ringnut eines der abzudichtenden Teile eingelassen, so daß eine Einzelmontage erforderlich ist.

Vorteilhafte Weiterbildungen der Erfindung sind in den Unteransprüchen aufgeführt.

Nachfolgend wird die Erfindung anhand der beigefügten Zeichnung näher erläutert. In dieser zeigen:
- Fig. 1: den schematischen Aufbau eines Ventils, welches mit mehreren Dichtringen ausgestattet ist, im Längsschnitt, unter Weglassung von für die Betätigung des Ventilkolbens erforderlichen Betätigungseinrichtungen, wobei die Dichtringe in vereinfachter Form dargestellt sind,
- Fig. 2 und 3: zwei Varianten des Dichtringes, wie er z.B. in dem Ventil gemäß Fig. 1 in mehrfacher Form eingebaut sein kann, jeweils im Querschnitt, das heißt im Schnitt entlang einer sich axial und radial erstreckenden Schnittebene.

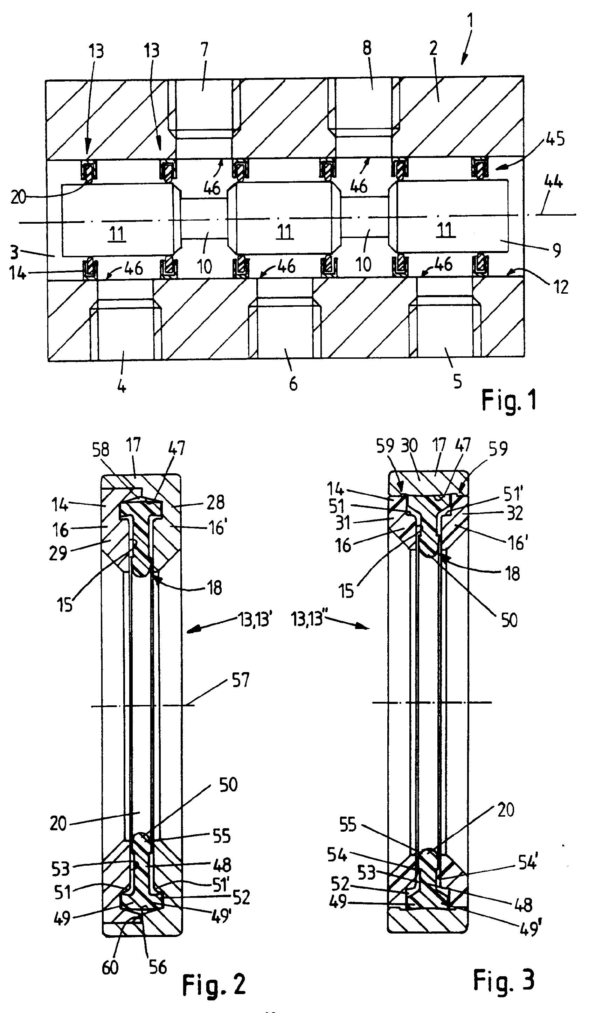

In Fig. 1 ist ein allgemein mit 1 bezeichnetes Mehrwegeventil abgebildet, das als 5/3-Wegeventil ausgestaltet ist und über ein Ventilgehäuse 2 verfügt, das im Innern eine längliche Ventilgehäuse-Ausnehmung 3 besitzt. Letztere dient als Aufnahme für einen Ventilschieber bzw. Ventilkolben 9 und ist entweder unmittelbar in das Ventilgehäuse 1 eingebracht oder von einem sonstigen gehäusefesten Teil, z.B. einer Hülse, gebildet. Die Ventilgehäuse-Ausnehmung 3 ist von mindestens einer Axialseite her zugänglich, indem wenigstens ein stirnseitiger Endabschnitt des Ventilgehäuses 2 mit einem nicht näher dargestellten abnehmbaren Ventildeckel versehen ist.

Seitlich am Umfang münden mehrere Ventilkanäle 4,5,6,7,8 in die Ventilgehäuse-Ausnehmung 3 ein. An sie sind außen in üblicher Weise eine Druckluftquelle (bei 6) und Verbraucher (bei 7 und 8) anschließbar, zwei weitere Ventilkanäle 4,5 dienen zur Abluftabführung.

Der Ventilkolben 9 ist in der Ventilgehäuse-Ausnehmung 3 in Axialrichtung 44 hin und her verstellbar. Er besitzt bevorzugt einen kreisförmigen Querschnitt und ist in Längsrichtung konturiert, indem er mehrere axial abwechselnd aufeinanderfolgende umlaufende Vertiefungen 10 und Erhebungen bzw. Vorsprünge 11 besitzt. Je nach Verschiebestellung werden so auf an sich bekannte Weise in den verschiedenen Kolbenstellungen verschiedene der vorhandenen Ventilkanäle fluidisch miteinander verbunden oder voneinander abgetrennt.

Zur Abdichtung zwischen der Wand 12 der Ventilgehäuse-Ausnehmung 3 und dem Ventilkolben 9 ist eine allgemein mit 45 bezeichnete Dichtungsanordnung vorhanden, die aus mehreren, in Axialrichtung 44 beabstandet aufeinanderfolgend koaxial angeordneten Dichtringen 13 besteht. Sie verfügen jeweils über ein nachfolgend als Gehäusering 14 bezeichnetes Gehäuse, mittels dessen sie in der Ventilgehäuse-Ausnehmung 3 axial unbewegbar gehäusefest festgelegt sind. Sie befinden sich daher in konzentrischer Anordnung zwischen der Wand 12 und dem Ventilkolben 9, den sie mit einem ringförmigen Dichtelement 20 im Bereich der Erhebungen 11 umschließen, ohne die Axialbewegung des Ventilkolbens 9 zu behindern.

Die Dichtringe 13 bilden ringförmige Dichtungseinheiten, die innerhalb der Ventilgehäuse-Ausnehmung 3 für eine axiale Abtrennung zwischen den einzelnen Ausnehmungsabschnitten dienen, in welche die Ventilkanäle 4-8 einmünden. Daher ist jeweils ein Dichtring 13 im axialen Bereich zwischen zwei axial aufeinanderfolgenden Ventilkanal-Mündungen 46 angeordnet. Auf die jeweils letzte Mündung 46 der Mündungsreihe kann zur Abdichtung nach außen hin ebenfalls ein derartiger Dichtring 13 folgen. Es ist ersichtlich, daß somit die Anzahl der pro Ventil zu verwendenden Dichtringe 13 vom jeweiligen Ventiltyp und der Anzahl der vorhandenen Ventilkanäle abhängt.

Die Dichtringe der Dichtungsanordnung sind in Fig. 1 lediglich schematisch angedeutet. Konkrete bevorzugte Ausführungsbeispiele ergeben sich aus den Fig. 2 und 3.

Die in den Fig. 2 und 3 abgebildeten Dichtringe 13,13′,13˝ besitzen jeweils ein ringförmiges Dichtungsgehäuse, das als Gehäusering 14 bezeichnet wird. Es ist mehrteilig ausgebildet, wobei die einzelnen Teile fest zusammengefügt sind, so daß sich insgesamt ein im wesentlichen U-förmiger Gehäusering-Querschnitt ergibt. Somit verfügt der Gehäusering 14 über einen ringförmig umlaufenden Ringraum 15, der an drei Seiten von den den U-Schenkeln entsprechenden beiden Ringpartien 16,16′ und der dem U-Quersteg entsprechenden Ringpartie 17 begrenzt wird und an einer radial orientierten umlaufenden Gehäuseöffnung 18 offen ist.

In dem Ringraum 15 eines jeweiligen Dichtringes 13 ist ein einziges, einstückiges, ringförmiges Dichtelement 20 koaxial angeordnet und festgelegt, so daß es in Radialrichtung nachgeben kann. Es ist im Gehäusering 14 unverlierbar gehalten, so daß der aus diesem Gehäusering 14 und dem Dichtelement 20 bestehende Dichtring ein einheitliches Bauelement darstellt, das sich wie ein Teil handhaben läßt.

Über den Gehäusering 14 läßt sich ein jeweiliger Dichtring 13 am jeweils einen zweier relativ zueinander bewegbaren und gegeneinander abzudichtenden Teile festlegen. Im Falle eines Ventils 1 gemäß Fig. 1 erfolgt die Festlegung vorzugsweise gehäuseseitig, indem der Gehäusering 14 mit seiner nach radial außen weisenden Ringpartie 17 an der Wand 12 festgelegt ist, während die Gehäuseöffnung 18 nach radial innen zum Ventilkolben 9 weist. Die axial unbewegbare Fixierung in der Ventilgehäuse-Ausnehmung 3 erfolgt auf beliebige Art, wobei allerdings eine Befestigung des Einpressens bevorzugt wird.

Das Dichtelement 20 der Ausführungsbeispiele setzt sich zusammen aus einer Dichtlippe 48 und zwei einstückig mit dieser ausgebildeten Haltevorsprüngen 49,49′. Die Dichtlippe 48 erstreckt sich im Querschnitt gesehen in radialer Richtung und hat insgesamt die Form einer Loch- oder Ringscheibe. Mit einer Dichtpartie 50, die von ihrem radial nach innen weisenden Umfangsrand gebildet ist, ragt die Dichtlippe 48 durch die Gehäuseöffnung 18 aus dem Ringraum 15 derart heraus, daß sie radial nach innen über den Gehäusering 14 bzw. dessen beiden Ringpartien 16,16′ vorsteht. Der innerhalb des Ringraumes 15 befindliche Abschnitt der Dichtlippe 48 ist von als Stützpartien wirkenden Abschnitten der beiden axialen Ringpartien 16,16′ flankiert, so daß die Dichtlippe 48 vor einem seitlichen Umknicken geschützt ist, wenn sich der von ihr umgriffene Ventilkolben 9 bewegt.

Die beiden Haltevorsprünge 49,49′ sind einstückig am innerhalb des Ringraumes 15 liegenden Umfangsrand der Dichtlippe 48 angeformt, wobei sie sich axial gegenüberliegen und in einander entgegengesetzte Axialrichtungen von der Dichtlippe wegragen. Auf diese Weise verfügt das Dichtelement 20 insgesamt im Querschnitt gesehen über eine T-förmige Gestalt. Die Haltevorsprünge 49,49′ sind umlaufende Ringvorsprünge, welche jeweils eine vom Gehäusering 14 innerhalb des Ringraumes 15 gebildete Gehäusestufe 51,51′ hintergreifen. Dadurch ist das Dichtelement 20 unverlierbar vom Gehäusering 14 gehalten.

Zweckmäßigerweise sind die beiden Gehäusestufen 51,51′ vom Übergangsbereich zwischen einem axial erweiterten Abschnitt 52 und einem schmäleren schlitzartigen Abschnitt 53 des Ringraumes 15 gebildet, wobei der schlitzartige Abschnitt 53 radial einerseits in die Gehäuseöffnung 18 und radial andererseits in den erweiterten Abschnitt 52 übergeht. Auf diese Weise hat also auch der Ringraum 15 bevorzugt eine im wesentlichen T-förmige Querschnittsgestalt, die zur Aufnahme des entsprechend konturierten Dichtelementes 20 besonders gut geeignet ist.

Bei einem nicht näher dargestellten Ausführungsbeispiel ist lediglich ein Haltevorsprung vorgesehen, demgegenüber das Vorhandensein zweier Haltevorsprünge einen besseren Sitz des Dichtelementes gewährleistet.

Die axiale Breite des Ringraumes 15 ist im Bereich des schlitzartigen Abschnittes 53, welcher die beiden Stützpartien 54,54′ bildet, vorzugsweise etwas größer als die Breite der Dichtlippe 48 in diesem Bereich, so daß letzterer geringes axiales Bewegungsspiel zur Verfügung steht, was sich vorteilhaft auf die Dichtfunktion auswirkt. Des weiteren weist die Dichtlippe 48 im Bereich der Dichtpartie 50 zweckmäßigerweise eine umlaufende Verdickung 55 auf, die sich noch ein Stück weit in den schlitzartigen Abschnitt 53 hineinerstreckt. Zwischen der Verdickung 55 und den an der entgegengesetzten Radialseite angeordneten Haltevorsprüngen 49,49′ verbleibt somit zweckmäßigerweise ein im Querschnitt gesehen halsförmiger dünnerer Dichtlippenabschnitt, der das Verformungsverhalten des Dichtelementes 20 positiv beeinflußt.

Das Dichtelement 20 besteht zweckmäßigerweise aus Kunststoffmaterial mit gummielastischen Eigenschaften. Bevorzugt besteht es aus Gummi, Perbunan oder Polyurethan.

Eine elastische Anpassung des von der Dichtpartie 50 umschlossenen Querschnittes an toleranzbedingt unterschiedliche Querschnitte des abzudichtenden Ventilkolbens 9 wird begünstigt, wenn der der Gehäuseöffnung 18 radial entgegengesetzte Grund 47 des Ringraumes 15 einen im Querschnitt gesehen gegenüber axial benachbarten Bereichen vertieften Bereich 56 aufweist. Dieser befindet sich zweckmäßigerweise im Bereich der axialen Mitte des Grundes 47, wie dies beim Ausführungsbeispiel der Fig. 2 gezeigt ist. Die Fläche des Grundes 47 ist hier rinnenartig konturiert, der axial mittlere Bereich des Grundes 47 ist also gegenüber der Längsachse 57 des Dichtringes 13 weiter beabstandet als die axialen Randbereiche des Grundes 47.

Die dem Grund 47 zugewandte Umfangsfläche des Dichtelementes 20 ist demgegenüber zweckmäßigerweise im Normalzustand im wesentlichen zylindrisch konturiert. Dadurch ergibt sich in radialer Verlängerung der Dichtlippe 48 zwischen dem Dichtelement 20 und dem Grund 47 ein sich von axial außen zur Mitte hin radial vergrößernder umlaufender Zwischenraum 58. Die die äußere Umfangsfläche des Dichtelementes 20 bildenden Haltevorsprünge 49,49′ liegen dabei mit ihren äußeren Randbereichen an den zugeordneten axialen Randbereichen des Grundes 47 an. Wird nun auf die Dichtlippe 11 im Rahmen des Einführens einer der Erhebungen 11 des Ventilkolbens 9 eine radiale Druckkraft ausgeübt, so vermag sich das Dichtelement 20 im radial mittleren Bereich nach axial außen in den Zwischenraum 58 hineinzuverformen. Die Haltevorsprünge 49,49′ dienen hier also zur radial beweglichen Aufhängung der Dichtlippe 48.

Es ist von Vorteil, wenn die Haltevorsprünge 49,49′ axial an den ihnen zugewandten Abschnitten des erweiterten Abschnittes 52 anliegen. Man kann auch vorsehen, das Dichtelement 20 im Bereich seiner Haltevorsprünge 49,49′ zwischen zwei axial beabstandeten Abschnitten des Gehäuseringes 14 einzuspannen.

Wenn ein Dichtring 13 in einer Ventilgehäuse-Ausnehmung 3 montiert ist, kann das Dichtelement 20 mit der Dichtpartie 50 dichtend mit einer konzentrisch umgebenen Erhebung 11 zusammenarbeiten, indem sie an deren Umfangsfläche dichtend angedrückt wird. Die Abdichtung zwischen dem Gehäusering 14 und dem Ventilgehäuse 2 erfolgt zweckmäßigerweise automatisch durch den festen Sitz des Gehäuseringes 14, der zweckmäßigerweise in die Ventilgehäuse-Ausnehmung 3 koaxial eingepreßt ist. Eine weitere Dichtwirkung findet zwischen dem Dichtelement 20 und dem Gehäusering 14 statt, wobei vor allem die Haltevorsprünge 49,49′ und/oder die Verdickung 55 dichtend mit Partien des Gehäuseringes 14 zusammenarbeiten können.

Der Gehäusering 14 der Dichtringe 13 besteht vorteilhafterweise aus mehreren Teilen. Die Fig. 2 zeigt eine zweiteilige und die Fig. 3 eine dreiteilige Ausführungsform. Bei den einzelnen Teilen handelt es sich vorzugsweise um Ringteile 28,29,30,31,32, die zu einer insbesondere starren Einheit in Gestalt des Gehäuseringes 14 zusammengesetzt bzw. zusammengebaut sind. Im noch unverbundenen Zustand zweier Ringteile, wenn also der Gehäusering 14 des Dichtringes 13,13′ noch zerlegt ist oder ein Ringteil des Gehäuseringes 14 des Dichtringes 13,13˝ noch nicht montiert ist, liegt dabei eine axial orientierte ringförmige Einsetzöffnung vor, die zum Ringraum 15 hin offen ist und ein axiales Einführen oder Einlegen des Dichtelementes 20 in den Ringraum 15 ohne nennenswerte Verformung des Dichtelementes 20 zuläßt. Man wird also Zunächst die Ringteile des jeweiligen Dichtringes 13 separat fertigen, sodann vor dem Zusammenbau sämtlicher Ringteile eines Dichtringes 13 das Dichtelement 20 einlegen, wonach man unter gleichzeitigem Verschließen der Einsetzöffnung das oder die verbleibenden Ringteile montiert.

Der Dichtring 13,13˝ besteht aus drei Ringteilen 30,31,32. Eines dieser Ringteile 30 bildet die umfangsseitige Wand oder Ringpartie 17 und ist nach Art eines hohlhylindrischen Ringteiles ausgebildet. Die beiden weiteren Ringteile 31,32 bilden die beiden Wände oder Ringpartien 16,16′, die das Dichtelement 20 axial flankieren. Sie sind nach Art von Ringscheiben oder Lochscheiben ausgebildet und an den beiden axialen Randbereichen des hohlzylindrischen Ringteiles 30 angeordnet und zweckmäßigerweise mit ihrem radial außen liegenden umlaufenden Rand radial innen am Ringteil 30 festgelegt. Die axiale Länge des Gehäuseringes 14 wird dadurch von der axialen Länge des Ringteiles 30 bestimmt. Die nach radial innen weisende Fläche des Ringteils 30 stellt den Grund 47 des Ringraumes 15 dar, während die axial gerichteten Flächen des Ringraumes 15 und damit auch die Gehäusestufen 51,51′ an den seitlichen Ringteilen 31,32 angeformt sind. Die radial gemessene Tiefe des erweiterten Abschnittes 52 kann hier, wie auch bei den übrigen Beispielen, größer sein als die entsprechend gemessene Dicke der Haltevorsprünge 49,49′.

Zur festen Verbindung der Ringteile 30,31,32 untereinander ist im Berührbereich zweier jeweils aneinander anliegender Ringteile 30,31 bzw. 30,32 eine Schnappverbindung 59 vorgesehen. Diese enthält ineinander eingreifende Rastvorsprünge bzw. Rastvertiefungen, wobei sich vorzugsweise eine unlösbare Schnapp- bzw. Rastverbindung ergibt. Beim Ausführungsbeispiel gemäß Fig. 3 ist der Grund 47 im Querschnitt gesehen zur axialen Mitte hin nach radial innen vorgewölbt, wobei die gewölbte Fläche zugleich einen Axialanschlag für die von axial außen her eingeschnappten scheibenförmigen Ringteile 31,32 bildet.

Es ist von Vorteil, wenn mindestens eines der jeweils miteinander eine Schnappverbindung eingehenden Ringteile aus Kunststoffmaterial besteht. Aus diesem Grunde bestehen beim Ausführungsbeispiel gemäß Fig. 3 die beiden axialen Ringteile 31,32 aus Kunststoffmaterial, insbesondere aus einem hochfesten Polymer. Das hohlzylindrische Ringteil 30 besteht zweckmäßigerweise aus Metall.

Als vorteilhafte Alternative zu einer Schnappverbindung ist auch eine montagefreundliche Einpreßverbindung möglich. Eine solche ist beim Dichtring 13,13′ der Fig. 2 verwirklicht, wobei die vorhandenen Ringteile 28,29 vorzugsweise aus Metall bestehen.

Beim Dichtring 13,13′ der Fig. 2 ist ein Ringteil 28 im Querschnitt gesehen im wesentlichen L-förmig ausgebildet. In ihm sind eine axiale Ringpartie 16′ und, zumindest teilweise, die umfangsseitige Ringpartie 17 zu einer einstückigen Einheit vereinigt. Die zweite Ringpartie 16 wird vom zweiten Ringteil 29 gebildet, das nach Art einer Loch- oder Ringscheibe ausgebildet ist und im Bereich des der Ringpartie 16′ entgegengesetzten freien Endes der Ringpartie 17 angeordnet ist. Wie bei Fig. 3 ist das im wesentlichen lochscheibenartige Ringteil 29 radial außen von der umfangsseitigen Ringpartie 17 umschlossen, in welche es zweckmäßigerweise eingepreßt ist.

Die axiale Einpreßtiefe des Ringteils 29 ist zweckmäßigerweise von einer umlaufenden Ringstufe 60 der Ringpartie 17 begrenzt. Sie befindet sich hier im Bereich der axialen Mitte des zusammengefügten Gehäuseringes 14. Auf diese Weise ist der Grund 47 des Ringraumes 15 von axial aneinander anschließenden Flächenabschnitten beider Ringteile 28,29 gebildet. Es kann sich jeweils um konische Flächenabschnitte handeln,deren Bereiche größeren Durchmessers einander zugewandt sind, so daß sich im zusammengefügten Zustand automatisch die rinnenförmige Kontur des Grundes 47 ergibt.

Man kann sich den Gehäusering 14 des Dichtringes 13,13′ als im Querschnitt U-förmiges Gebilde vorstellen, das im Bereich des die U-Schenkel verbindenden U-Quersteges eine sich ausgehend vom Ringraum 15 zunächst ein Stück weit radial nach außen und sodann axial bis hin zur axialen Außenfläche des Gehäuseringes 14 erstreckende Trennstelle besitzt.

Es ist noch günstig, wenn die beiden die Gehäuseöffnung 18 axial flankierenden Endbereiche der beiden Ringpartien 16,16′ außen zur Gehäuseöffnung 18 hin verjüngt ausgebildet sind. Dadurch erweitert sich der vom Gehäusering 14 umschlossene Querschnitt ausgehend vom Bereich der Gehäuseöffnung 18 in Richtung zu den axialen Außenflächen. Die erweiterten Bereiche können von konischen Schrägflächen gebildet sein.

Als Fügeverbindung zwischen zwei Ringteilen könnte man unter Umständen auch eine Klebe-, Löt- oder Schweißverbindung vorsehen. Eine Schnapp- oder Preßverbindung ist in der Montage allerdings erheblich unaufwendiger und roboterfreundlicher.

Der Dichtring (13) kann auch so ausgebildet sein, daß sowohl die Gehäuseöffnung (18) als auch die Dichtpartie (50) nach radial außen weist. In diesem Falle wird der Dichtring (13) mit der radial innen liegenden Ringpartie (17) festgelegt und die Dichtpartie (50) dichtet nach außen hin. Speziell bei einer derartigen Anordnung kann der Dichtring (13) auch als auf einem Kolben eines Arbeitszylinders festgelegte Kolbendichtung verwendet werden.

## Patentansprüche

1. Mehrwegeventil mit einer Dichtungsanordnung zur Abdichtung des axial bewegbaren Ventilkolbens (9) gegenüber dem Ventilgehäuse (2), die in einer Ventilgehäuse-Ausnehmung (3) oder auf dem Ventilkolben (9) axial unbewegbar gehäuse- bzw. kolbenfest festgelegt ist und mindestens eine ringförmige Dichtungseinheit (13) aufweist, die ein zwischen zwei axial beabstandeten ringförmigen Wänden (16, 16′) gehaltenes ringförmiges Dichtelement (20) aufweist, wobei die beiden Wände (16, 16′) Bestandteil eines mehrteiligen Gehäuseringes (14) sind, der eine radial nach innen bzw. nach außen gerichtete umlaufende Gehäuseöffnung (18) aufweist, wobei in dem Ringraum (15) zwischen den beiden axialen Wänden (16, 16′) des Gehäuseringes (14) ein einstückiges Dichtelement (20) radial nachgiebig festgelegt ist, wobei das Dichtelement (20) eine im Querschnitt gesehen sich radial erstreckende ringförmige Dichtlippe (48) besitzt, die mit einer Dichtpartie (50) durch die Gehäuseöffnung (18) aus dem Ringraum (15) herausragt, radial über den Gehäusering (14) vorsteht und ringsum dichtend am Ventilkolben (9) bzw. an der Ventilgehäuse-Ausnehmung (3) anliegt, wobei der innerhalb des Ringraumes (15) befindliche Abschnitt der Dichtlippe (48) von als Stützpartien wirkenden Abschnitten der beiden Wände (16, 16′) axial flankiert ist, und wobei das Dichtelement (20) mindestens einen axial vorspringenden umlaufenden Haltevorsprung (49, 49′) aufweist, der zur unverlierbaren Halterung des Dichtelementes (20) eine vom Gehäusering (14) innerhalb des Ringraumes (15) gebildete Gehäusestufe (51, 51′) hintergreift, dadurch gekennzeichnet, daß der Gehäusering (14) einen im wesentlichen U-förmigen Querschnitt aufweist, daß der Gehäusering (14) ausschließlich das einstückige Dichtelement (20) aufnimmt, daß die den Gehäusering (14) bildenden Teile fest zusammengefügt sind, so daß die Dichtungseinheit von einem aus dem Gehäusering (14) und aus dem Dichtelement (20) bestehenden, als einheitliches Bauelement handhabbaren Dichtring (13, 13′, 13˝) gebildet ist, und daß der als einheitliches Bauelement handhabbare Dichtring (13, 13′, 13˝) eine radial nach außen bzw. nach innen weisende umfangsseitige Wand (17) aufweist, die im Preßsitz in der Ventilgehäuse-Ausnehmung (3) bzw. auf dem Ventilkolben (9) festgelegt ist.

2. Dichtungsanordnung nach Anspruch 1, dadurch gekennzeichnet, daß das Dichtelement (20) zwei sich axial gegenüberliegende, in einander entgegengesetzte Axialrichtungen von der Dichtlippe (48) wegragende Haltevorsprünge (49,49′) besitzt, die im Ringraum (15) jeweils eine ringförmige Gehäusestufe (51,51′) hintergreifen.

3. Dichtungsanordnung nach Anspruch 1 oder 2, dadurch gekennzeichnet, daß die Gehäusestufen (51,51′) vom Übergangsbereich zwischen einem axial erweiterten Abschnitt (52) und einem schmäleren schlitzartigen Abschnitt (53) des umlaufenden Ringraumes (15) gebildet sind, wobei sich der schlitzartige Abschnitt (53) radial zwischen dem erweiterten Abschnitt (52) und der Gehäuseöffnung (18) erstreckt.

4. Dichtungsanordnung nach Anspruch 2 oder 3, dadurch gekennzeichnet, daß sowohl das Dichtelement (20) als auch der Ringraum (15) des Gehäuseringes (14) jeweils eine im wesentlichen T-förmige Querschnittsgestalt besitzen, wobei die drei T-Abschnitte des Dichtelementes (20) von den beiden Haltevorsprüngen (49,49′) und der Dichtlippe gebildet sind, und wobei die radiale Länge der Dichtlippe (48) zweckmäßigerweise größer ist als die gemeinsame axiale Länge der beiden Haltevorsprünge (49,49′).

5. Dichtungsanordnung nach einem der Ansprüche 1 bis 4, dadurch gekennzeichnet, daß der der Gehäuseöffnung (18) radial entgegengesetzte Grund (47) des Ringraumes (15), im Querschnitt gesehen, einen gegenüber axial benachbarten Bereichen vertieften Bereich (56) aufweist, welcher sich insbesondere in der axialen Mitte des Grundes (47) befindet.

6. Dichtungsanordnung nach einem der Ansprüche 1 bis 5, dadurch gekennzeichnet, daß die Dichtlippe (48) im Bereich der Dichtpartie (50) eine axiale umlaufende Verdickung (55) aufweist, die sich ein Stück weit in den Ringraum (15) hineinerstreckt, wobei zwischen der Verdickung (55) und den Haltevorsprüngen (49,49′) ein halsförmiger dünnerer Dichtlippenabschnitt verbleibt.

7. Dichtungsanordnung nach einem der Ansprüche 1 bis 6, dadurch gekennzeichnet, daß die axiale Breite des Ringraumes (15) im Bereich der die Stützpartien bildenden Wände (16,16′) größer ist als die Breite der Dichtlippe (48) in diesem Bereich, derart, daß der Dichtlippe (48) ein ein seitliches Bewegen zwischen den Stützpartien erlaubendes Bewegungsspiel zur Verfügung steht.

8. Dichtungsanordnung nach einem der Ansprüche 1 bis 7, dadurch gekennzeichnet, daß die Dichtlippe (48) nach Art einer Lochscheibe geformt ist.

9. Dichtungsanordnung nach einem der Ansprüche 1 bis 8, dadurch gekennzeichnet, daß das Dichtelement (20) mit dem axialen Rand der Haltevorsprünge (49,49′) innerhalb des Ringraumes (15) am Gehäusering (14) anliegt, mit denen es zwischen zwei axial beabstandeten Abschnitten des Gehäuseringes (14) eingespannt sein kann.

10. Dichtungsanordnung nach einem der Ansprüche 1 bis 9, dadurch gekennzeichnet, daß der Gehäusering (14) aus mindestens zwei fest miteinander verbundenen koaxialen Ringteilen (28-32) besteht, wobei im unverbundenen Zustand zweier Ringteile (28-32) eine axial orientierte ringförmige Einsetzöffnung zum Ringraum (15) für das Dichtelement (20) zur Verfügung steht.

11. Dichtungsanordnung nach Anspruch 10, dadurch gekennzeichnet, daß mindestens eines der Ringteile (29,31,32) nach Art einer Ringscheibe ausgebildet ist, die im zusammengesetzten Zustand des Gehäuseringes (14) zumindest teilweise eine einem der U-Schenkel entsprechende axiale Wand des Gehäuseringes (14) bildet.

12. Dichtungsanordnung nach Anspruch 10 oder 11, dadurch gekennzeichnet, daß wenigstens eines der Ringteile (28) des Gehäuseringes (14) aus zwei im Querschnitt gesehen im wesentlichen L-förmig angeordneten Ringpartien (16′, 17′) besteht, wobei die eine Ringpartie (16′) im zusammengesetzten Zustand des Gehäuseringes (14) eine dem einen der U-Schenkel entsprechende axiale Wand und die andere Ringpartie (17) zumindest teilweise die dem Verbindungsstück zwischen den beiden U-Schenkel entsprechende umfangsseitige Wand des Gehäuseringes (14) bildet.

13. Dichtungsanordnung nach Anspruch 11 in Verbindung mit Anspruch 12, dadurch gekennzeichnet, daß der Gehäusering (14) zweiteilig ausgebildet ist, wobei das als Ringscheibe ausgebildete Ringteil (29) radial innen im Bereich des freien Endes der die umfangsseitige Wand bildenden Ringpartie (17) des L-förmigen Ringteils (28) angeordnet ist.

14. Dichtungsanordnung nach Anspruch 11, dadurch gekennzeichnet, daß der Gehäusering (14) dreiteilig ausgebildet ist und ein die umfangsseitige Wand des Gehäuseringes (14) bildendes hohlzylindrisches Ringteil (30) aufweist, an dessen beiden axialen Randbereichen insbesondere radial innen jeweils ein nach Art einer Ringscheibe ausgebildetes Ringteil (31,32) angeordnet ist.

15. Dichtungsanordnung nach einem der Ansprüche 10 bis 14, dadurch gekennzeichnet, daß die Ringteile (28,29) des Dichtringes (13,13′) durch Ineinandereinpressen fest miteinander verbunden sind.

16. Dichtungsanordnung nach einem der Ansprüche 10 bis 14, dadurch gekennzeichnet, daß die Ringteile (30, 31, 32) des Dichtringes (13, 13˝) im Rahmen einer Schnappverbindung oder Rastverbindung miteinander verbunden sind.

17. Dichtungsanordnung nach einem der Ansprüche 1 bis 16, dadurch gekennzeichnet, daß der Gehäusering (14) im Bereich der beiden axialen Wände (16, 16′) radial in Richtung zur Gehäuseöffnung (18) hin eine verjüngte Querschnittskontur besitzt.

18. Dichtungsanordnung nach einem der Ansprüche 1 bis 17, dadurch gekennzeichnet, daß mehrere Dichtringe (13) mit Abstand zueinander axial aufeinanderfolgend angeordnet und über ihre umfangsseitige Wand (17) axial unbewegbar an dem sie tragenden Bauteil (3, 9) festgelegt sind.

## Claims

1. Multiway valve with a seal assembly for sealing the axially-moveable valve piston (9) relative to the valve housing (2), fixed to the housing or piston, axially immoveable, in a valve housing recess (3) or on the valve piston (9), and having one or more annular seal units (13), with an annular seal element (20) held between two annular walls (16, 16′) spaced axially apart, wherein the two walls (16, 16′) are part of a multi-section housing ring (14), with an all-round housing aperture (18) aligned radially inwards or outwards, wherein in the annular space (15) between the two axial walls (16, 16′) of the housing ring (14), a one-piece seal element (20) is located with radial flexibility, wherein the seal element (20) viewed in cross-section has a radially-extending annular seal lip (48), with a sealing section (50) which extends from the annular space (15) through the housing aperture (18), projects radially above the housing ring (14) and makes all-round sealing contact with the valve piston (9) or valve housing recess (3), wherein that section of the seal lip (48) within the annular space (15) is axially flanked by sections of the two walls (16, 16′) acting as support sections, and wherein the seal element (20) has one or more axially projecting all-round retaining projections (49, 49′) which, for captive retention of the seal element (20), engage from behind with a housing step (51, 51′) formed by the housing ring (14) within the annular space (15), characterized in that the housing ring (14) has an essentially U-shaped cross-section, that the housing ring (14) exclusively accommodates the one-piece seal element (20), that the parts forming the housing ring (14) are permanently joined together, so that the seal unit is formed by a seal ring (13, 13′, 13˝) comprised of the housing ring (14) and the seal element (20) as an easy-to-handle unified component, and that the seal ring (13, 13′, 13˝) in the form of an easy-to-handle unified component has a radially-outwards or radially-inwards facing peripheral wall (17), located by an interference fit in the valve housing recess (3) or on the valve piston (9).

2. Seal assembly according to claim 1, characterized in that the seal element (20) has two axially opposite retaining projections (49, 49′), extending away in opposite axial directions from the seal lip (48), each engaging from behind with an annular housing step (51, 51′) in the annular space (15).

3. Seal assembly according to claim 1 or 2, characterized in that the housing steps (51, 51′) are formed by the transitional area between an axially extended section (52) and a narrower slot-like section (53) of the all-round annular space (15), with the slot-like section (53) extending radially between the extended section (52) and the housing aperture (18).

4. Seal assembly according to claim 2 or 3, characterized in that both the seal element (20) and also the annular space (15) of the housing ring (14) have an essentially T-shaped cross-section, with the three T-sections of the seal element (20) formed by the two retaining projections (49, 49′) and the seal lip, while the radial length of the seal lip (48) is expediently greater than the combined axial length of the two retaining projections (49, 49′).

5. Seal assembly according to any of claims 1 to 4, characterized in that, viewed in cross-section, the base (47) of the annular space (15) radially opposite the housing aperture (18) has a recessed area (56) relative to axially-adjacent areas, located in particular in the axial centre of the base (47).

6. Seal assembly according to any of claims 1 to 5, characterized in that, in the area of the sealing section (50), the seal lip (48) has an axially circumferential swelling (55), extending a little way into the annular space (15), with a neck-shaped thinner seal lip section remaining between the swelling (55) and the retaining projections (49, 49′).

7. Seal assembly according to any of claims 1 to 6, characterized in that the axial width of the annular space (15) in the area of the walls (16, 16′) forming the support sections is greater than the width of the seal lip (48) in this area, such that the seal lip (48) has play permitting lateral movement between the support sections.

8. Seal assembly according to any of claims 1 to 7, characterized in that the seal lip (48) is in the form of a perforated disc.

9. Seal assembly according to any of claims 1 to 8, characterized in that the seal element (20) fits closely against the housing ring (14) with the axial edge of the retaining projections (49, 49′) within the annular space (15), and can be mounted by it between two sections of the housing ring (14) spaced axially apart.

10. Seal assembly according to any of claims 1 to 9, characterized in that the housing ring (14) is comprised of at least two coaxial ring elements (28-32) securely joined together, wherein two ring elements (28-32) in the unjoined state have an axially-oriented annular insertion opening to the annular space (15) for the seal element (20).

11. Seal assembly according to claim 10, characterized in that one or more of the ring elements (29, 31, 32) is in the form of an annular disc, forming in the assembled state of the housing ring (14) at least in part, an axial wall of the housing ring (14) corresponding to the U-limb.

12. Seal assembly according to claim 10 or 11, characterized in that at least one of the ring elements (28) of the housing ring (14) is formed of two ring sections (16′, 17′) mounted essentially in an L-shape viewed in cross-section, wherein in the assembled state of the housing ring (14) the one ring section (16′) forms an axial wall corresponding to the U-limb, and the other ring section (17) forms at least partly the peripheral wall of the housing ring (14) corresponding to the connecting piece between the two U-limbs.

13. Seal assembly according to claim 11 in conjunction with claim 12, characterized in that the housing ring (14) is designed in two sections, with the ring element (29) in the form of an annular disc mounted radially inwards in the area of the free end of the ring section (17) of the L-shaped ring element (28) forming the peripheral wall.

14. Seal assembly according to claim 11, characterized in that the housing ring (14) is designed in three sections and has forming the peripheral wall of the housing ring (14) a hollow-cylindrical ring element (30), at the two axial edge areas of which are arranged, in particular radially inwards, ring elements (31, 32), each in the form of an annular disc.

15. Seal assembly according to any of claims 10 to 14, characterized in that the ring elements (28, 29) of the seal ring (13, 13′) are firmly joined together by pressing into one another.

16. Seal assembly according to any of claims 10 to 14, characterized in that the ring elements (30, 31, 32) of the seal ring (13, 13˝) are joined together by means of a snap or catch connection.

17. Seal assembly according to any of claims 1 to 16, characterized in that the housing ring (14) has a tapering cross-sectional contour in the radial direction of the housing aperture (18) in the area of the two axial walls (16, 16′).

18. Seal assembly according to any of claims 1 to 17, characterized in that several seal rings (13) arranged consecutively, spaced axially apart, and axially immoveable, are fixed by their peripheral wall (17) to the component (3, 9) which supports them.

## Revendications

1. Soupape à plusieurs voies avec un dispositif d'étanchéité pour rendre étanche le piston de soupape (9) déplaçable axialement par rapport au corps de soupape (2), dispositif qui est fixé, à demeure, sur le corps ou le piston, immobile axialement dans une cavité (3) du corps de soupape ou sur le piston de soupape (9) et présente au moins une unité d'étanchéité (13) annulaire, qui présente un élément d'étanchéité (20) annulaire, maintenu entre deux parois (16, 16′) annulaires, espacées axialement, les deux parois (16, 16′) faisant partie d'un anneau de boîtier (14) en plusieurs parties, ayant une ouverture de boîtier (18) faisant un tour complet et orientée radialement vers l'intérieur, ou vers l'extérieur, un élément d'étanchéité (20) réalisé d'une seule pièce étant fixé, de manière flexible radialement, dans l'espace annulaire (15) situé entre les deux parois axiales (16, 16′) de l'anneau de boîtier (14), l'élément d'étanchéité (20) ayant une lèvre d'étanchéité (48) annulaire s'étendant radialement, vue en coupe transversale, qui fait saillie, depuis l'espace annulaire (15), par une partie d'étanchéité (50), à travers l'ouverture de boîtier (18), en faisant saillie radialement au-delà de l'anneau de boîtier (14) et adhère, de façon circulaire et de manière étanche, au piston de soupape (9), ou à la cavité (3) du corps de soupape, la section de la lèvre d'étanchéité (48) se trouvant à l'intérieur de l'espace annulaire (15) étant flanquée axialement par les sections des deux parois (16, 16′), agissant comme parties d'appui, l'élément d'étanchéité (20) présentant au moins une saillie de retenue (49, 49′) faisant un tour complet et faisant saillie axialement, qui saisit par l'arrière un épaulement du boîtier (51, 51′) formé par l'anneau de boîtier (14) à l'intérieur de l'espace annulaire (15) afin de maintenir l'élément d'étanchéité (20) imperdable, caractérisée en ce que l'anneau de boîtier (14) a une section transversale sensiblement en U, en ce que l'anneau de boîtier (14) reçoit exclusivement l'élément d'étanchéité (20) d'une seule pièce, en ce que les parties formant l'anneau de boîtier (14) sont assemblées rigidement, de sorte que l'unité d'étanchéité soit formée d'un anneau d'étanchéité (13, 13′, 13˝) manipulable comme élément de construction unitaire, composé de l'anneau de boîtier (14) et de l'élément d'étanchéité (20), et en ce que l'anneau d'étanchéité (13, 13′, 13˝) manipulable comme élément de construction unitaire présente une paroi latérale périphérique (17), orientée radialement vers l'extérieur, ou vers l'intérieur, qui est montée, avec ajustement serré, dans la cavité (3) du corps de soupape, ou sur le piston de soupape (9).

2. Dispositif d'étanchéité selon la revendication 1, caractérisé en ce que l'élément d'étanchéité (20) possède deux saillies de retenue (49, 49′) opposées axialement, s'écartant de la lèvre d'étanchéité (48) dans des directions axiales opposées l'une par rapport à l'autre, saillies qui saisissent chacune par l'arrière un épaulement de boîtier (51, 51′) annulaire, dans l'espace annulaire (15).

3. Dispositif d'étanchéité selon la revendication 1 ou 2, caractérisé en ce que les épaulements de boîtiers (51, 51′) sont formés par la zone de transition située entre une section (52) agrandie axialement et une section (53), en forme de fente, plus étroite, de l'espace annulaire (15), la section (53) en forme de fente s'étendant radialement entre la section (52) agrandie et l'ouverture du boîtier (18).

4. Dispositif d'étanchéité selon la revendication 2 ou 3, caractérisé en ce que tant l'élément d'étanchéité (20), qu'également l'espace annulaire (15) de l'anneau de boîtier (14), ont respectivement une section transversale sensiblement en T, les trois parties du T de l'élément d'étanchéité (20) étant formées respectivement par les deux saillies de retenue (49, 49′) et par la lèvre d'étanchéité, et la longueur radiale de la lèvre d'étanchéité (48) étant, avantageusement, supérieure à la longueur commune axiale des deux saillies de retenue (49, 49′).

5. Dispositif d'étanchéité selon l'une des revendications 1 à 4, caractérisé en ce que le fond (47) de l'espace annulaire (15), opposé radialement à l'ouverture de boîtier (18), vu en section transversale, présente une zone (56) creusée par rapport aux zones voisines, zone qui se trouve en particulier au milieu du fond (47), en direction axiale.

6. Dispositif d'étanchéité selon l'une des revendications 1 à 5, caractérisé en ce que la lèvre d'étanchéité (48) présente dans la zone de la partie d'étanchéité (50) un épaississement (55) circulaire axial, qui s'étend partiellement dans l'espace annulaire (15), une section de lèvre d'étanchéité plus mince, en forme de col, subsistant entre l'épaississement (55) et les saillies de retenue (49, 49′).

7. Dispositif d'étanchéité selon l'une des revendications 1 à 6, caractérisé en ce que la largeur axiale de l'espace annulaire (15), dans la zone des parois (16, 16′) formant les parties d'appui, est supérieure à la largeur de la lèvre d'étanchéité (48) dans cette zone, de telle sorte que la lèvre d'étanchéité (48) dispose d'un jeu de déplacement permettant un déplacement latéral entre les parties d'appui.

8. Dispositif d'étanchéité selon l'une des revendications 1 à 7, caractérisé en ce que la lèvre d'étanchéité (48) est formée à la manière d'un disque perforé.

9. Dispositif d'étanchéité selon l'une des revendications 1 à 8, caractérisé en ce que l'élément d'étanchéité (20) s'appuie par le bord axial des saillies de retenue (49, 49′), à l'intérieur de l'espace annulaire (15), sur l'anneau de boîtier (14), saillies à l'aide desquelles il peut être enserré entre deux sections de l'anneau de boîtier (14), espacées axialement.

10. Dispositif d'étanchéité selon l'une des revendications 1 à 9, caractérisé en ce que l'anneau de boîtier (14) est composé d'au moins deux parties d'anneau (28 à 32) coaxiales, liées rigidement entre elles, une ouverture d'insertion, orientée axialement, vers l'espace annulaire (15), étant à disposition pour l'élément d'étanchéité (20), lorsque les deux parties d'anneau (28 à 32) sont à l'état non assemblé.

11. Dispositif d'étanchéité selon la revendication 10, caractérisé en ce qu'au moins une des parties d'anneau (29, 31, 32) est réalisée à la manière d'un disque annulaire, qui forme, à l'état assemblé de l'anneau de boîtier (14), au moins partiellement une paroi axiale de l'anneau de boîtier (14), correspondant à l'une des branches du U.

12. Dispositif d'étanchéité selon la revendication 10 ou 11, caractérisé en ce qu'au moins l'une des parties d'anneau (28) de l'anneau de boîtier (14) est composée de deux parties d'anneau (16′, 17′) disposées, vues en section transversale, sensiblement en L, la première partie d'anneau (16′) formant, à l'état assemblé de l'anneau de boîtier (14), une paroi axiale correspondant à la première branche du U et l'autre partie d'anneau (17) formant au moins partiellement la paroi latérale périphérique de l'anneau de boîtier (14), correspondant à la partie de liaison entre les deux branches du U.

13. Dispositif d'étanchéité selon la revendication 11, en combinaison avec la revendication 12, caractérisé en ce que l'anneau de boîtier (14) est réalisé en deux parties, la partie d'anneau (29) réalisée en forme de disque annulaire étant disposée radialement à l'intérieur dans la zone de l'extrémité libre de la partie d'anneau (17), formant la paroi latérale périphérique, de la partie d'anneau (28) en L.

14. Dispositif d'étanchéité selon la revendication 11, caractérisé en ce que l'anneau de boîtier (14) est réalisé en trois parties et présente une partie d'anneau (30) cylindrique creuse, formant la paroi latérale périphérique de l'anneau de boîtier (14), une partie d'anneau (31, 32), réalisée à la manière d'un disque annulaire, étant disposée sur chacune de ses deux zones de bordure axiales et orientée en particulier radialement vers l'intérieur.

15. Dispositif d'étanchéité selon l'une des revendications 10 à 14, caractérisé en ce que les parties d'anneau (28, 29) de l'anneau d'étanchéité (13, 13′) sont liées rigidement l'une à l'autre au moyen d'un emboîtement par pression.

16. Dispositif d'étanchéité selon l'une des revendications 10 à 14, caractérisé en ce que les parties d'anneau (30, 31, 32) de l'anneau d'étanchéité (13, 13˝) sont liées entre elles par une liaison à déclic ou une liaison à encliquetage.

17. Dispositif d'étanchéité selon l'une des revendications 1 à 16, caractérisé en ce que l'anneau de boîtier (14) a dans la zone des deux parois (16, 16′) axiales un contour de section transversale s'effilant en allant radialement en direction de l'ouverture de boîtier (18).

18. Dispositif d'étanchéité selon l'une des revendications 1 à 17, caractérisé en ce que plusieurs anneaux d'étanchéité (13) sont disposés, successivement, à distance les uns des autres, axialement, et sont montés immobiles axialement, sur un élément de construction (3, 9) les portant, par l'intermédiaire de leur paroi latérale périphérique (17).
